# EUROPEAN PATENT SPECIFICATION

(11) **EP 4 134 259 B1**
(45) Date of publication and mention of the grant of the patent: **26.02.2025**
(21) Application number: 22188111.3
(22) Date of filing: 01.08.2022
(51) Int. Cl.: B60K 35/10, B60K 35/80, B60K 35/81, B60K 35/85

(54) **A DISPLAY DEVICE FOR A MOTOR VEHICLE**
ANZEIGEVORRICHTUNG FÜR EIN KRAFTFAHRZEUG
DISPOSITIF D'AFFICHAGE POUR VÉHICULE AUTOMOBILE

(30) Priority: 02.08.2021 IT 202100020780
(43) Date of publication of application: 15.02.2023
(73) Proprietor: GENIOMA S.R.L., 45011 Adria (RO) (IT)
(72) Inventor: MAZZOLI, Francesco Saverio, 45011 ADRIA (RO) (IT); SAVIO, Andrea, 45011 ADRIA (RO) (IT)
(74) Representative: Braidotti, Andrea

(56) References cited:
- EP-A1- 2 609 582
- EP-A2- 3 026 552
- EP-B1- 2 609 582
- WO-A1-2017/217936

## Description

The present invention relates to a display device for a motor vehicle, in particular for a racing and / or a competition vehicle.

The device in question is intended to be used inside a passenger compartment of a motor vehicle during a motoring event, for example a competition, in particular to send communications and information to at least one driver of the vehicle by a defined central unit from the control station.

In the field of motoring events, whether they are motor vehicles or cars, there is a need to have a communication system between the vehicles participating in the event and the control station. This is because it can be important, also for safety reasons, for the control station to be able to communicate a plurality of information with the pilots involved in the competition. In particular, for example, information relating to the state of the route, the visibility along the route itself, or the presence of accidents along the route can be communicated.

In the field of high-level motor racing - such as the world rally, the high-level championships organized by the international automobile federation such as formula 1, formula 2 or formula 3, or the world championship - are known of communication systems between vehicles. and the control station which are integrated inside the vehicle and allow a one-to-one communication between the vehicle itself and the control station. These solutions are constructively very complicated and, therefore, very expensive and also require a dedicated and specific infrastructure that the event organizer installs in each place where the event takes place.

Furthermore, with regards to the communications from the control station to the pilots, the known systems provide dedicated displays that allow to view very simple and basic information, such as the mere presence of yellow, red or blue flags (which represent conventional signals of attention or danger during a competition) along the track, without any additional precise information regarding, for example, the position of these flags and / or the entrance to a safety car.

However, these solutions are not fully satisfactory in the case of minor leagues as they have some disadvantages which prevent their use and limit their diffusion. For example, the fact that currently the communication devices with the control station are integrated within the participating vehicles entails high production costs of the vehicles themselves, which, in the event that they have not been specifically built to integrate these devices, must be suitably modified for this purpose. Furthermore, this specificity excludes the modularity of the system and, consequently, limits the transportability of the communication devices themselves from one vehicle to another, consequently also limiting the number of vehicles in which they can be installed.

In the case of lower level competitions, communications from the control station to the drivers are generally carried out through the use of personnel present on the circuit at specific locations on each track and in charge of reporting, through the use of appropriate means such as flags or light signals, any danger to pilots arriving near the point guarded by said personnel.

However, this solution is not fully satisfactory as it is based on the presence of personnel on the sides of the route, who are therefore in the position of having to approach the track to effectively signal the dangers to oncoming pilots, and therefore exposing themselves to the risk of accidents. Furthermore, coverage is only possible in the vicinity of the workstations where staff are present, with a consequent inevitable incomplete coverage of the route, unless intervening with a massive deployment of personnel, and a consequent inevitable increase in costs. Furthermore, the signaling method itself entails drawbacks in that it is not particularly effective in conditions of poor visibility, such as in the presence of fog and / or rain or at night.

In addition, voice communications via radio are sometimes used for communications from the control station to the pilots. This solution may not be fully satisfactory as radio communications can be disturbed, particularly in "rally" type events.

Furthermore, the known solutions are configured only to signal the presence of a generic problem, and therefore the signal is sent to all pilots indiscriminately. This leads to a flow of information that is unwanted and / or useless for some pilots (for example those who have just passed through the sector where the accident occurred, or who in any case are not immediately affected by the accident) and this can therefore result in a distraction for the pilots, with the consequent increase in the risk of further accidents and / or a decrease in the performance of the pilots themselves.

EP 3 026 552 A2 discloses an alert device, including a wireless communications receiver for receiving alert files for said device, a positioning unit for providing location data representing the location of said device, a microcontroller system for processing and storing said alert files, and performing an alert application defined by said files and using said location data to provide alert data corresponding to the location of said device.

EP 2 609 582 A1 discloses a vehicle safety warning system which enables a warning of a potential or an actual hazard to be transmitted via a signal between two or more vehicles.

The object of the invention is to propose a display device, according to the subject-matter of claim 1, for a motor vehicle, which allows to overcome the aforementioned drawbacks of the known solutions.

Further optional embodiments are defined by the dependent claims.

The present invention is further clarified hereinafter in a its preferred embodiment shown for purely illustrative and non-limiting purposes with reference to the attached drawing tables, in which:
- Figure 1: shows a front axonometric view of a preferential embodiment of the display device for a motor vehicle object of the present invention,
- Figure 2: shows a rear axonometric view of the device illustrated in Figure 1;
- Figure 3: shows an exploded axonometric front view of the device illustrated in Figures 1 and 2;
- Figure 4: shows a schematic circuit view of the device according to the invention and in particular of an electronic control apparatus thereof, and
- Figures 5a-f: show some examples of warnings shown on the screen of the device according to the invention.

The device object of the present invention has been identified as a whole with the reference 1 in the attached figures. The display device 1 according to the invention for a motor vehicle, preferably for displaying information or the like.

Advantageously, the device 1 is configured to propose to the driver and / or any other person inside the motor vehicle information, alarms, or the like, during a motoring event. In particular, "motoring event" means, in general, any event in which at least one vehicle moves / competes in a circuit, track or road, for example, during a race or qualifying or a free practice, or even a driving course, a test-drive or a day of testing. Preferably, said race and / or motoring event is of the type held in a circuit that must be covered a plurality of times and / or in a circuit in which the finish corresponds to the start and / or, in general, in a circuit closed having a circumscribed and limited extension.

"Motor vehicle" or "vehicle" hereinafter means any motorized vehicle that can be used in motoring events, for example but not limited to wheeled vehicles, such as motorcycles and cars of different categories or power, trucks, or other vehicles, or alternatively also to tracked vehicles such as snow cats, or even boats. Preferably, a "vehicle" means a car.

Advantageously, the device 1 is configured to be installed in a corresponding motor vehicle.

Preferably, said device 1 can be installed on all vehicles taking part in the motoring event in question.

Conveniently, the device 1 comprises a support structure 2, which preferably carries mounted and / or contains inside it the various components of the device 1 itself. Advantageously, said support structure 2 is configured to be removably installable in said vehicle, preferably inside the passenger compartment of the latter, preferably on the dashboard and / or in a position easily visible to the driver.

Advantageously, the device 1 is configured to be installed in an easily removable manner in the motor vehicle, and in particular it can be connected to the latter by means of a limited number of cables (preferably of the standard type) and in such a way that its removal does not compromise the general functions (ie those not in direct correlation with the presence of the device itself) of said vehicle.

The device 1 comprises an electronic control apparatus 3, mechanically mounted on the support structure 2.

The electronic control apparatus 3 can for example comprise a microcontroller and / or an electronic board, as described in detail below. Preferably said electronic control apparatus 3 comprises a processor and, in particular, can be implemented by a printed circuit (PCB) in which a high performance microprocessor is mounted.

Advantageously, said electronic control apparatus 3 can comprise and / or be connected to a device (for example a "real-time clock", also called "RTC") with a clock function, preferably a high precision clock.

Conveniently, the device 1 is intended to be positioned inside the motor vehicle, preferably in correspondence with the dashboard of the latter and / or in a position suitable for being easily visible by the driver and / or second driver.

The display device 1 for a motor vehicle according to the invention comprises at least one support structure 2.

Conveniently, the support structure 2 comprises at least one box-like body internally defining a housing volume 18.

More in detail, the support structure 2 comprises an internally hollow shell 2' and at least one front plate 2" mechanically fixed to said shell 2' defining together the aforementioned housing volume 18.

Advantageously, the support structure 2 is made of metallic material, for example anodized aluminum or steel or similar.

In accordance with the preferred embodiment illustrated in the attached figures, the shell 2' comprises a rear plate 24, arranged opposite to the front plate 2" and delimiting the housing volume 18 at the rear, and a frame 25 arranged perimetrically to connect the front plate 2" and the rear plate 24.

Advantageously, between the shell 2' and the front plate 2" of the support structure 2, the device 1 provides at least one gasket 20, preferably annular, configured to limit any ingress of water and / or humidity inside the housing volume 18.

Preferably, the shell 2' and the front plate 2" are mechanically constrained to each other by means of removable fixing means 21.

In accordance with the preferential embodiment illustrated in the attached figures, the removable fixing means 21 comprise screws 22.

The device 1 according to the invention also comprises at least one electronic control apparatus 3 mechanically mounted on said support structure 2.

The electronic control apparatus 3 comprises a computing unit 6, at least a memory unit 9 electrically connected to at least said computing unit 6 and at least one receiver module 11 electrically connected to at least said computing unit 6.

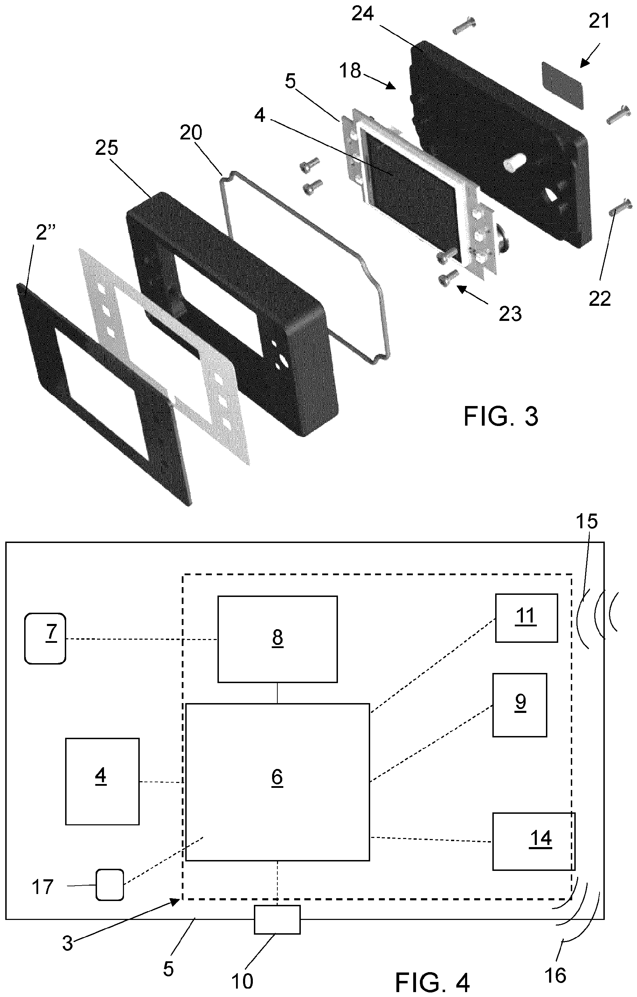

A schematic circuit view of the electronic control apparatus 3 is visible in the attached figure 4.

The device 1 further comprises at least one display 4 mechanically mounted on said support structure 2 and electrically connected to said electronic control apparatus 3 and visible from the outside of the device itself by a user. Conveniently, the device 1 can be installed and / or installed inside the vehicle so as to be easily visible by the pilot and / or the co-pilot.

Advantageously, the display 4 is in color and, preferably, in high resolution. Conveniently, the display 4 is configured to show images 26 and / or alphanumeric symbols 27 and / or contents processed by the device 1. In particular, the images 26 can in turn contain alphanumeric symbols, but these, unlike the alphanumeric symbols 27 are fixed and not changeable. In one embodiment the display 4 is configured to show a screen which also comprises a plurality of images 26, configured to clarify and / or complete and / or expand the information sent by each of them.

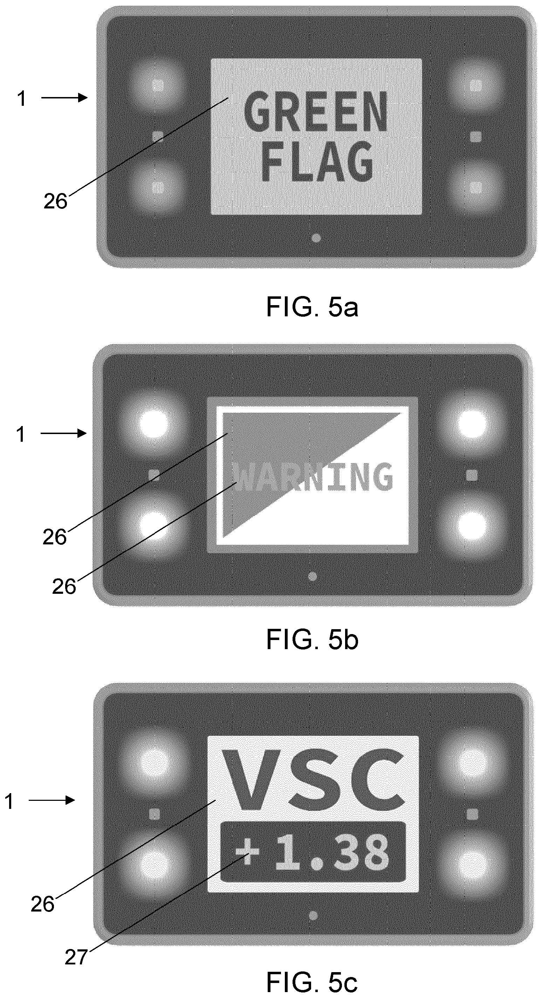

As illustrated in FIGS. 5a and 5b, in which the illustrated image 26 is the same, but the alphanumeric symbols 27 vary (+1.38 in FIG. 5a, - 1.19 in FIG. 5b). In particular, therefore, the alphanumeric symbols 27 can be variable independently with respect to image 26.

Advantageously therefore, preferably, the alphanumeric symbols 27 can represent and / or indicate different information with respect to the alphanumeric symbols possibly contained within the images 26 In particular, moreover, the alphanumeric symbols 27 can be displayed in a spatially dedicated space which can be positioned inside the images 26 and / or outside them.

Conveniently, an algorithm can be stored inside the memory unit 9 which allows to select the color and / or the font and / or the size with which to represent said alphanumeric symbols 27. In this way it is possible to vary the color of the symbols represented, said color variation consisting itself of information that is sent in a simple, rapid and effective manner to the pilot and / or co-driver.

Alternatively, a plurality of alphanumeric symbols having the same shape (ie being substantially the same letter, the same number, or the same symbol) but of different colors and / or fonts and / or sizes can be stored in the memory unit 9.

Advantageously, moreover, the display 4 is configured to display exclusively data and / or warnings coming from / generated by the electronic control apparatus 3 of said device 1. Furthermore, preferably, the display 4 is not interactive, i.e. it is not possible for the user select the contents and / or images 26 which are displayed on the display 4 itself, thus reducing the risk of distraction for the pilots.

Advantageously, the display 4 can also display the map, information on the navigation and / or the status of the track along which the motoring event in which the vehicle is engaged is taking place.

Advantageously, the display 4 can display suitable warnings which may have been processed / generated by the device 1 on the basis of data received and / or information received from the control station.

For example, said warnings may include information relating to the state of the motor vehicle and / or the state of other vehicles involved in the motoring event, such as for example failures occurred to other vehicles along the track, or information on the state of the track and / or the motoring event in which the vehicle is taking part, such as the application of a "Full Course Yellow" or "Code60" or "Virtual Safety Car" regime or relating to dangerous situations along the track, which may be localized or disseminated, and which are for example marked with a yellow flag with a red flag, as will be clarified further below.

Preferably, the display 4 is configured to show the warnings according to a color code and / or by means of suitable symbols which are easy to interpret by the pilot and / or his navigator and / or his second pilot. Preferably, they can use the symbols and / or colors selected by the International Automobile Federation (FIA) or the International Motorcycle Federation (FIM).

Conveniently, said warnings can be shown in such a way that they are easily referable to the section of the circuit concerned, for example they can be represented in correspondence with the portion of the trace which is displayed with a corresponding image 26 on the display 4.

Conveniently, the display 4 of the device 1 it is additional and separate / independent from an integrated / own display normally provided in the vehicle.

Advantageously, the display 4 can have adjustable brightness.

Advantageously, the display 4 can be connected to a plurality of light sources 12, preferably a plurality of front LED lights 12. Conveniently said plurality of LED lights can be of the RGB type, in order to send signals corresponding to a corresponding color code.

Preferably, the light sources 12 can be positioned substantially around the display 4. For example, they can be positioned on the frame of the display 4 itself and in particular they can be placed across the front plate 2".

Conveniently, the display 4 and / or the light sources 12 are connected to the electronic control apparatus 3, by means of a communication bus and / or by means of a wireless communication module and / or by means of a serial port.

Advantageously, the light sources 12 can be controlled by the electronic control apparatus 3 of the device 1. For example, they can be activated when a warning is projected on the display 4. Preferably, they are activated only when there is a change in the image 26 represented / implemented on the display 4, for example they can be activated alternately and / or flashing, to attract the attention of the pilot or driver or of another subject ( for example with the role of co-driver) on board the vehicle. Preferably, when there are no changes in the image 26 implemented on the display 4, the light sources 12 can be deactivated. Advantageously, the light sources 12 can be activated in order to emit a light which substantially corresponds to the color of the image 26 which is displayed on the display 4.

Preferably, the electronic control apparatus 3 of said device 1 is also configured to control the display on said display 4 of information contained in and / or derived from a signal which has been received by said device 1 and which has been sent by the central unit by means of communication described in detail below.

Conveniently, the electronic control apparatus 3 of the device 1 is configured to process and / or use the received signal in order to:
- display the information contained in said second signal in said display 4, and / or
- generate additional information to be displayed on said display 4, and / or
- to decide if and when to generate an alert to be displayed on display 4, as described in more detail below.

Preferably, the electronic control apparatus 3 of the device 1 is configured to process and / or use the information contained in the received signal.

Advantageously, the electronic control apparatus 3 of each device 1 is configured to control the display on the display 4 of a notice that relates to the content of / derived from said received signal and / or whose display is controlled by the latter. Preferably, the warning can be displayed in a symbolic and synthetic way, so as to be quickly understood by the pilot or his navigator / second pilot. Advantageously, a corresponding activation of the light sources 12 can be associated with the display of the warning, for example a flashing of the same with a color which substantially corresponds to the color of the image 26 displayed on said dedicated display.

Conveniently, the electronic control apparatus 3 of the device 1 mounted in a first motor vehicle is configured in such a way that - in the event that the signal received concerns an episode / situation (for example another stationary car or an accident) that could / should influence the conduct of the driver of said first motor vehicle - a corresponding warning is shown on display 4.

Advantageously, in fact, the driver and / or the second driver / navigator are in no way able to remove the warning from display 4 as the latter is not interactive. Conveniently, in fact, the electronic control apparatus 3 of said device 1 is also configured so that the removal of the display of a warning displayed on said display 4 occurs automatically after a certain time interval has elapsed and / or subsequently the display of a further signal which is sent to the electronic control apparatus 3 of said device 1 by the central unit.

Conveniently, the warning shown on display 4, which is associated with the device 1 installed in each vehicle, can also include information relating to the position in which the incident / situation and / or the track sector concerned occurred. from said episode / situation.

In accordance with the preferential embodiment of the present invention, the memory unit 9 contains a plurality of images 26, in which each image 26 has associated at least one identifier.

More in detail, each image 26 saved inside the memory unit 9 has associated a numerical code, for example a tag or is named in the memory with this numerical code, which defines the aforementioned identifier.

Conveniently, said receiver module 11 is configured to receive at least one command signal 15 (which corresponds to said received signal) containing at least said identifier of at least one said image 26 contained in said memory unit 9.

Conveniently, in memory unit 9 can be present a plurality of alphanumeric symbols 27, preferably identified by a corresponding identifier, more preferably identified by the respective ASCII code, can also be stored.

Preferably, the command signal contains a plurality of information, among which the numerical code defining the aforementioned identifier is advantageously present.

The computing unit 6 is programmed to receive said command signal from said receiver module 11, to select said image 26 equipped with said identifier contained in said command signal and to send a display signal to said display 4 comprising at least said image 26 contained in said memory unit 9.

Furthermore, the computing unit 6 can be configured to receive said command signal from said receiver module 11, to select said alphanumeric symbols 27 equipped with the corresponding selected identifiers, and to send a display signal to said display 4 comprising at least said alphanumeric symbol.

Conveniently, moreover, the computing unit 6 can be configured to receive said command signal from said receiver module 11, process it in order to identify at least one suitable alphanumeric symbol 27 to be displayed, preferably by means of said corresponding identifier, and subsequently display it on said display 4.

In this way, the device object of the invention allows an image 26 selected externally to the motor vehicle to be displayed on the display 4 quickly and safely, thus being able to send information and / or warnings to the driver quickly and minimizing the risk of errors in sending the command signal.

Furthermore, in this way, the device object of the invention allows to display on the display 4 a combination of an image 26 and of at least one alphanumeric symbol 27.

Advantageously, as anticipated above, the device 1 object of the invention comprises at least one front LED 12 mechanically mounted on said support structure 2 next to said display 4, electrically connected to and activated by said electronic control apparatus 3.

In accordance with the preferential embodiment illustrated in the attached figures, the electronic control apparatus 3 comprises at least one LED control module 8 electrically connected to said computing unit 6 and to said at least one front LED 12 and configured to control the lighting of said front LED 12.

Conveniently, the memory unit 9 contains a plurality of data packets, each packet comprises at least one different image 26, preferably at least one corresponding alphanumeric symbol 27 and / or at least a corresponding lighting configuration of said at least one front LED 12 and / or a different brightness setting for the front LEDs 12 and / or for the display 4.

Advantageously, each data packet contained in the memory unit 9 is identified with a corresponding identifier and preferably comprises at least one image file 26, in particular in RAW format, and / or a corresponding identifier (for example a corresponding ASCII code) relating to said alphanumeric symbol 27 and / or a text file containing the illumination configuration of the at least one front LED 12.

Conveniently, the file containing the illumination configuration of the front LEDs 12 also comprises the configuration of an illumination of the rear LED 13, described in detail below.

Likewise, advantageously, the file containing the lighting configuration of the front LEDs 12 also includes the configuration of an illumination of the display 4.

Advantageously, upon receipt of the command signal 15 by the receiver module 11 of the electronic control apparatus 3, the computing unit 6 interrogates the memory unit 9 to trace the data packet to which the identifier contained in the command signal 15 itself corresponds.

Preferably, the device 1 according to the invention comprises a plurality of said front LEDs 12 arranged laterally with respect to said display 4 electrically connected to said LED control module 8.

Advantageously, in accordance with the preferential embodiment illustrated in the attached figures, the device 1 comprises six front LEDs, divided into two groups of three front LEDs arranged laterally to the display 4.

Conveniently, the aforementioned lighting configuration contained in each data packet contained in said memory unit 9 includes instructions for illuminating with a different color and / or to flash said plurality of front LEDs 12 and / or to vary the brightness of at least one front LED 12 of said plurality of front LEDs 12 and / or to vary the brightness of said display 4.

For example, a configuration can provide for illuminating continuously four front LEDs of the six total, causing the other two to flash, including different colors. The different lighting configurations vary on the basis of the different signal and / or warning to be given to the pilot and are preferably more invasive in correspondence with more important signals and / or warnings.

Advantageously, the device 1 comprises at least one rear LED 13 mechanically mounted on said support structure 2 and electrically connected to said electronic control apparatus 3 and configured to be activated in a different way on the basis of a different status of the device 1 or on the status of additional devices connected to it (not described in detail below).

More clearly, the rear LED 13 is configured to be visible by operators who check the state of the motor vehicles before departure. In fact, the rear LED 13 is a high-brightness LED and lights up differently (in particular in terms of color and / or flashing) if the device 1 (or other devices present on board and advantageously connected to it) present anomalies or faults.

In this way, before departure, the operators can visually check the status of the device 1 quickly and easily.

Advantageously, the rear LED 13 is configured to show, preferably when the vehicle is stationary and with the engine off, the general state of one of the device 1 or of other devices.

Operationally, the operator looking at the rear LED 13 of the device 1 is interested in quickly understanding if the device 1 is active, if it receives data, if it is powered, if there is an active connection with a vehicle canbus, etc.

Advantageously, the text file containing the lighting configuration of the at least one front LED 12 and the rear LED 13, by means of the LED control module, allows the brightness of the LEDs 12, 13 to be varied even within the same configuration. associated with a corresponding identifier.

Conveniently, the text file allows, with the aid of the electronic board 5, to vary the brightness of the display 4 within the same configuration associated with a corresponding identifier, together with the brightness variation of the aforementioned front LEDs 12 and rear LEDs 13.

Operationally, remotely, it is then possible to determine a percentage to be applied to the brightness contained in the aforementioned text file for both the display 4 and the front LEDs 12.

In this way, the device 1 according to the invention advantageously allows to reduce the brightness of the LEDs 12, 13 and of the display 4 remotely in relation, for example, to the weather conditions (sun or rain) and / or the time of use (day / night).

For example, if the remote station sends the identifier to communicate a red flag status to the pilot, the electronic control apparatus 3 obtains from the text file the commands to activate the front LEDs with a series of red flashes , in particular of four front LEDs 12 (in particular the four front LEDs placed at the corners), with a light intensity of 100% to attract the attention of the pilot, and then derive from the same text file to switch to hold the four LEDs fronts on fixed in red but with a brightness of 30%.

In this way, if the operator sets, from the remote station, a brightness of 100% of the front LEDs, the electronic control apparatus 3 and in particular the LED control module, activates the aforementioned front LEDs 12 with the amount of brightness set in the text file.

Otherwise, if for example the operator sets the brightness of the front LEDs to 50%, the LED control module 8 sets a brightness of the LEDs equal to 50% of the text file: in particular for the red flag it will be 50 % in flashes and 15% when they remain on steady.

The same goes for the brightness of the display backlighting: if the operator sets 10%, the display backlighting will be at 10% of what is foreseen in the instruction file for each specific scenario.

Preferably, said electronic control apparatus 3 comprises at least one sending module 14 electrically connected to said computing unit 6 configured to send at least one output signal 16.

The device 1 advantageously comprises at least one brightness sensor 17 mechanically mounted on said control support structure 2, electrically connected to said electronic control apparatus 3 and configured to detect an external brightness value of the external environment and send to said computing unit 6 an electrical signal containing the measurement of said external brightness.

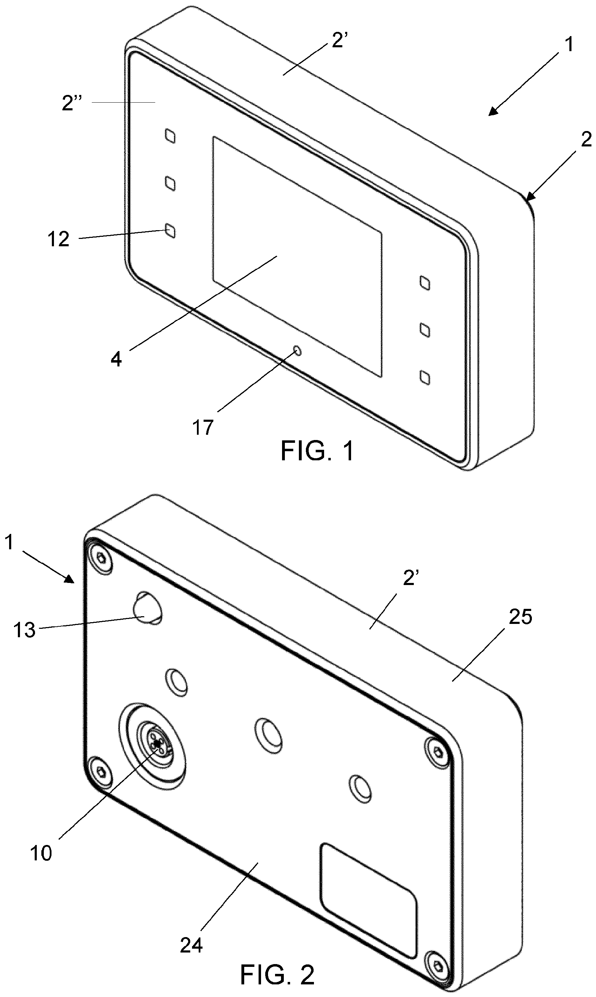

Advantageously, the brightness sensor is mounted on the front plate 2" of the support structure 2, as clearly visible in the attached figure 1.

Advantageously, said computing unit 6 of said electronic control apparatus 3 is configured to receive said electrical signal sent by said brightness sensor and to modify an illumination brightness of said display 4 on the basis of the value of said external brightness.

Conveniently, in accordance with a particular embodiment of the present invention, the sending module 14 is configured to send said output signal 16 containing at least said external brightness value to an external receiving apparatus.

In particular, the external receiving device can be a match control station.

Preferably, said receiver module 11 of the device 1 according to the invention is configured to receive from said external apparatus a correction value for modifying an illumination brightness of said display 4 on the basis of said correction value.

More in detail, the external apparatus receives a plurality of signals 16 each containing the external brightness value detected by a corresponding motor vehicle in the race.

Conveniently, the external apparatus processes the aforementioned plurality of signals 16 by calculating the average of the external brightness values. Furthermore, the external apparatus from the average calculated in this way processes a correction value for each display 4 of each corresponding motor vehicle, in order to provide all the participants with the correct brightness value as the external brightness varies.

Conveniently, the sending module 14 is configured to send a confirmation signal, ie an "Acknowledge" signal (known as the "ack" signal). The confirmation signal is programmed to be emitted in response to a command signal received by the receiver module 11.

Advantageously, the confirmation signal comprises information on which identifier has been received and / or which image 26 is visible on the display 4 at the time of reception and / or what brightness is set for the LEDs 12, 13 by the LED control module 8.

For example, the receiver module 11 receives a signal containing an identifier to display a corresponding image 26 and / or an alphanumeric symbol 27. Conveniently, the sending module 14 outputs a reprocessed signal which indicates which image 26 is displayed on the display 4 and / or which brightness is set on the LEDs 12, 13 at that exact moment, so as to understand whether the device 1 actually has received and executed the request to show the desired image 26.

Advantageously, the device 1 object of the present invention comprises at least one magnetic sensor electrically connected to said computing unit 6 of said electronic control apparatus 3 and configured to detect a magnetic signal from the outside to command said computing unit 6 to send on said display 4 a settings screen of said device.

More in detail, the magnetic sensor (not shown in the attached figures) is configured to detect the presence of a magnetic field, for example the magnetic field generated by a permanent magnet.

In this way, the operators can operatively bring a permanent magnet close to the support structure 2 of the device 1 to make the magnetic sensor receive the aforementioned magnetic signal and activate the device settings screen, for the purpose, for example, of viewing any error messages or similar.

Conveniently, the magnetic sensor (which advantageously comprises a switch that can be activated by a magnet) allows you to show the above settings screen, and / or allows you to show a screen with some operating parameters (for example, firmware version, internal operating data or other values received from the outside which are used for software debugging or which in any case must not be shown to the pilot).

In accordance with a different embodiment, the magnetic sensor can advantageously be replaced with or combined with an RFID sensor (ie a sensor for radiofrequency identification) configured to be activated only upon receipt of a precise command signal with a corresponding identification. In this way, access to the aforementioned software information could be protected from intrusion from the outside or tampering or the like.

Advantageously, the device 1 according to the invention comprises at least one connector 10 mechanically linked to the support structure 2 and electrically connected to the electronic control apparatus 3.

The connector 10 can be for example a pogo-pin or a USB connector or the like. The connector 10 is configured to receive a communication cable through which an operator can program and / or update the computing unit 6.

Preferably, the data packets saved inside the memory unit 9 are transferred by means of the aforementioned connector 10.

Advantageously, the electronic control apparatus 3 comprises an electronic board 5, for example a pre-printed card, on which are advantageously mounted the computing unit 6, the memory unit 9, the display 4 and the front LEDs 12.

The electronic board 5 is suitably housed to size inside the housing compartment 18 defined by the support structure 2.

Advantageously, moreover, in order to limit any relative movement of the electronic board 5 with respect to the support structure 2, the device 1 comprises further removable fixing means 23, for example screws or the like, which are placed through the electronic board 5 and engage screwing the shell 2' of the support structure 2.

Obviously, the removable fixing means 23 may be of any type known per se to the skilled in the art without thereby departing from the scope of protection of the present patent.

Preferably, the command signal 15 is received by the electronic control apparatus 3 in a communication BUS, which preferably comprises at least four channels.

More in detail, the communication BUS of the electronic control apparatus 3 comprises a first channel dedicated to receiving the identifier and in particular the numerical code that defines the identifier.

Preferably, moreover, the communication BUS of the electronic control apparatus 3 comprises a second channel dedicated to an activation signal of the rear LED 13.

Preferably, furthermore, the communication BUS of the electronic control apparatus 3 comprises a third dedicated channel to the brightness signal to vary the luminous intensity of the display 4.

Preferably, furthermore, the communication BUS of the electronic control apparatus 3 comprises a fourth channel dedicated to the luminous intensity signal of the front LEDs 12.

Advantageously, the luminous intensity of the front LEDs 12 is substantially equal to the brightness of the display 4.

As shown in the examples illustrated in FIG. 5a-f the device 1 is configured to display an image 26 on the screen, possibly accompanied by a further image 26 and / or by a plurality of alphanumeric symbols 27 which are modified according to requirements.

For example, in the case represented in FIG. 5a, the device is configured to display on the screen an image 26 relating to information to be sent to the pilot and / or co-pilot.

For example, in the case represented in FIG. 5b, the device is configured to display on the screen a plurality of images 26, one of which comprises letters (but could also include numbers), in which one of the two, or both images 26 are designed to clarify and / or complete and / or expand information to be sent to the pilot and / or co-pilot.

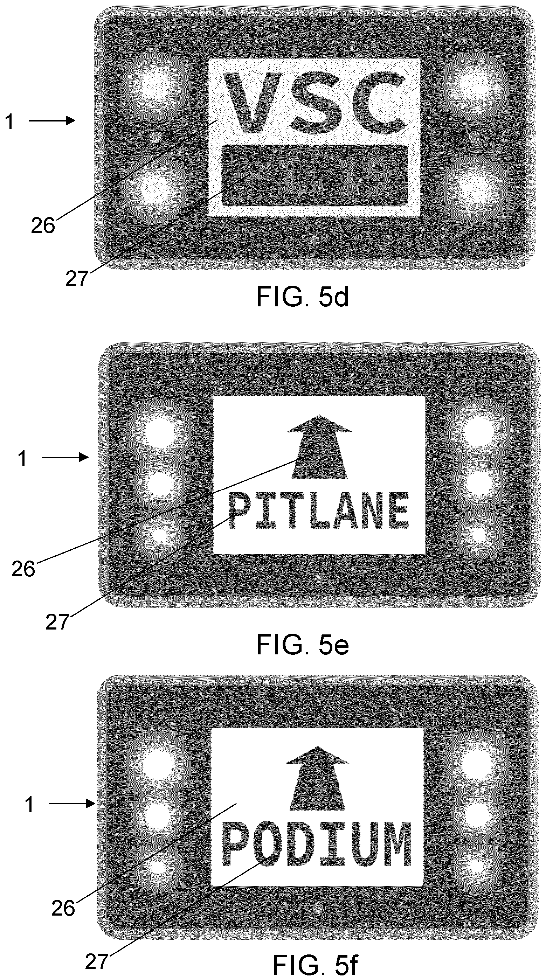

For example, in the case represented in FIG. 5c, d, the image 26 can represent an indication of the virtual safety car (Virtual Safety Car, VSC), and furthermore the display can include the alphanumeric symbols 27 can represent the difference between the lap time (or on the lap portion ) allowed by the VSC regime, and the lap time (or lap portion) actually achieved, changing color from green if the lap time is higher than allowed, and therefore does not involve penalties, to red in the case in which the lap time is less than that allowed, and therefore may lead to penalties. In other applications not shown, an image 26 with the speed limit could be shown to the pilot / co-driver, and then a constantly updated numerical data representing the deviation of the vehicle, in km / h, from said limit can be added to a window and displayed with alphanumeric symbols 27. In circuit events, the alphanumeric symbols 27 could be used to provide information about the progress of the competition or event. For example: a rolling-time that shows the remaining time of the track session, an indication about the number of laps left or completed, the display of the last lap time obtained or other useful information such as, for example, the currently active driver's number ID, through which all systems are notified which driver is driving the vehicle in case of events with multiple drivers involved. As shown in the examples illustrated in FIG. 5e, f the device 1 is configured to display on the screen an image 26 accompanied by a plurality of alphanumeric symbols 27 which complete and / or integrate and / or expand the meaning of the image 26.

As is clear from what has been said, the device 1 according to the invention is particularly advantageous in that:
- the device can be installed on any type of vehicle, even standard, in a simple, quick and economical way,
- the display on the screen of the device is carried out by means of images already present in the memory of the screen, which are only recalled upon receipt of a specific signal, obviating the risk of incorrect sending of an image to be displayed;
- shows on the screen only the relevant information (essentially operating a sort of "filtering") and sent by the race control,
- the removal of the warnings shown on the screen takes place automatically on the basis of the signals sent by the central unit of the control station apparatus, thus avoiding the need for direct intervention by the pilot and / or co-pilot which could cause unwanted distractions.

## Claims

1. Display device (1) for a motor vehicle, which comprises:
- at least one support structure (2);
- at least one electronic control apparatus (3) mechanically mounted on said support structure (2), which comprises:
- a computing unit (6);
- at least one memory unit (9) electrically connected to at least said computing unit (6);
- at least one receiver module (11) electrically connected at least to said computing unit (6);
- at least one display (4) mechanically mounted on said support structure (2) and electrically connected to said electronic control apparatus (3) and visible from the outside by a user;
- said memory unit (9) contains a plurality of images (26), in which each image (26) has associated at least one identifier;
**characterized by** the fact that
- said receiver module (11) is configured to receive at least one command signal (15) containing at least said identifier of at least one said image (26) contained in said memory unit (9);
- said computing unit (6) is programmed to receive said command signal from said receiver module (11), to select said image (26) equipped with said identifier contained in said command signal and to send a display signal to said display (4) comprising at least said image (26) contained in said memory unit (9).

2. Display device (1) according to claim 1, **characterized in that** it comprises at least one front LED (12) mechanically mounted on said support structure (2) next to said display (4), electrically connected to and activated by said electronic control (3).

3. Display device (1) according to claim 2, **characterized in that** said electronic control apparatus (3) comprises at least one LED control module (8) electrically connected to said computing unit (6) and to said at least one front LED (12) and configured to control the lighting of said front LED (12).

4. Display device (1) according to claim 3, **characterized in that** said memory unit (9) contains a plurality of data packets, each packet comprising at least one different said image (26) and at least one corresponding lighting configuration of said at least a front LED (12).

5. Display device (1) according to claim 4, **characterized in that** it comprises a plurality of said front LEDs (12) arranged laterally with respect to said display (4) electrically connected to said LED control module (8); said lighting configuration contained in each said package of said memory unit (9) comprising instructions to illuminate with a different color and / or to flash said plurality of front LEDs (12) and / or to vary the brightness of at least one front LED (12) of said plurality of front LEDs (12) and / or to vary the brightness of said display (4).

6. Display device (1) according to one or more of the preceding claims, **characterized in that** it comprises at least one rear LED (13) mechanically mounted on said support structure (2) and electrically connected to said electronic control apparatus (3) and configured to be activated at least on the basis of an error signal.

7. Display device (1) according to one or more of the preceding claims **characterized in that** said electronic control apparatus (3) comprises at least one sending module (14) electrically connected to said computing unit (6) configured to send at least one output signal (16); said device comprising at least one brightness sensor (17) mechanically mounted on said support structure (2), electrically connected to said electronic control apparatus (3) and configured to detect an external brightness value of the external environment and send to said computing unit (6) an electrical signal containing the measurement of said external brightness.

8. Display device (1) according to claim 7, **characterized in that** said computing unit (6) of said electronic control apparatus (3) is configured to receive said electrical signal sent by said brightness sensor and to modify the brightness of said display (4) on the basis of the value of said external brightness.

9. Display device (1) according to claim 7 or 8, **characterized in that** said sending module (14) is configured to send said output signal (16) containing at least said external brightness value to an external receiving apparatus; said receiver module (11) is configured to receive from said external apparatus a correction value for modifying the brightness of said display (4) on the basis of said correction value.

10. Display device (1) according to one or more preceding claims, **characterized in that** it comprises at least one magnetic sensor electrically connected to said computing unit (6) of said electronic control apparatus (3) and configured to detect a magnetic signal from external to command said computing unit (6) to send on said display (4) a setting screen of said device.

11. Display device (1) according to one or more preceding claims, **characterized in that**:
- said memory unit (9) contains a plurality of alphanumeric symbols (27), each identified by a corresponding identifier,
- said computing unit (6) is programmed to receive said command signal from said receiver module (11), to select at least one of said alphanumeric symbols (27) identified by said corresponding identifier contained in said command signal and to send a signal display on said display (4) comprising at least one alphanumeric symbol (27) contained in said memory unit (9).

12. Display device (1) according to one or more preceding claims, **characterized in that** said at least one alphanumeric symbol (27) is displayed in a dedicated space which is positioned:
- within said at least one image (26) which is displayed on the display (4) and / or
- outside said at least one image (26) which is displayed on the display (4).

13. Display device (1) according to one or more preceding claims, **characterized in that** said alphanumeric symbols (27) are variable independently with respect to said at least one image (26) which is displayed on the display (4).

14. Display device (1) according to one or more preceding claims, **characterized in that** it is configured to display said alphanumeric symbols (27) of at least two different colors.

15. Display device (1) according to one or more preceding claims, **characterized in that** it is configured to display on the display (4) an image (26) accompanied by a plurality of alphanumeric symbols (27) which complete and / or integrate the meaning of said image (26).

## Patentansprüche

1. Anzeigevorrichtung (1) für ein Kraftfahrzeug, die umfasst:
- mindestens eine Stützstruktur (2);
- mindestens ein elektronisches Steuergerät (3), das mechanisch an der Stützstruktur (2) montiert ist und Folgendes umfasst:
- eine Recheneinheit (6);
- mindestens eine Speichereinheit (9), die elektrisch mit mindestens der Recheneinheit (6) verbunden ist;
- mindestens ein Empfängermodul (11), das elektrisch mindestens mit der Recheneinheit (6) verbunden ist;
- mindestens eine Anzeige (4), die mechanisch an der Stützstruktur (2) montiert und elektrisch mit dem elektronischen Steuergerät (3) verbunden und von außen für einen Benutzer sichtbar ist;
- die Speichereinheit (9) eine Vielzahl von Bildern (26) enthält, wobei jedem Bild (26) mindestens eine Kennung zugeordnet ist;
**dadurch gekennzeichnet, dass**
- das Empfängermodul (11) so konfiguriert ist, dass es mindestens ein Befehlssignal (15) empfängt, das mindestens die Kennung mindestens eines der in der Speichereinheit (9) enthaltenen Bilder (26) enthält;
- die Recheneinheit (6) so programmiert ist, dass sie das Befehlssignal von dem Empfängermodul (11) empfängt, das Bild (26) auswählt, das mit der in dem Befehlssignal enthaltenen Kennung versehen ist, und ein Anzeigesignal an die Anzeige (4) sendet, das zumindest das in der Speichereinheit (9) enthaltene Bild (26) enthält.

2. Anzeigevorrichtung (1) nach Anspruch 1, **dadurch gekennzeichnet, dass** sie mindestens eine vordere LED (12) umfasst, die mechanisch an der Stützstruktur (2) neben der Anzeige (4) montiert ist, elektrisch mit dem elektronischen Steuergerät (3) verbunden ist und von diesem aktiviert wird.

3. Anzeigevorrichtung (1) nach Anspruch 2, **dadurch gekennzeichnet, dass** das elektronische Steuergerät (3) mindestens ein LED-Steuermodul (8) umfasst, das elektrisch mit der Recheneinheit (6) und mit der mindestens einen vorderen LED (12) verbunden ist und so konfiguriert ist, dass es die Beleuchtung der vorderen LED (12) steuert.

4. Anzeigevorrichtung (1) nach Anspruch 3, **dadurch gekennzeichnet, dass** die Speichereinheit (9) eine Vielzahl von Datenpaketen enthält, wobei jedes Paket mindestens ein unterschiedliches Bild (26) und mindestens eine entsprechende Beleuchtungskonfiguration der mindestens einen vorderen LED (12) umfasst.

5. Anzeigevorrichtung (1) nach Anspruch 4, **dadurch gekennzeichnet, dass** sie eine Vielzahl der vorderen LEDs (12) umfasst, die seitlich in Bezug auf die Anzeige (4) angeordnet und elektrisch mit dem LED-Steuermodul (8) verbunden sind; wobei die Beleuchtungskonfiguration, die in jedem der Pakete der Speichereinheit (9) enthalten ist, Anweisungen umfasst, um mit einer verschiedenen Farbe zu leuchten und/oder die Vielzahl der vorderen LEDs (12) blinken zu lassen und/oder die Helligkeit von mindestens einer vorderen LED (12) der Vielzahl der vorderen LEDs (12) zu verändern und/oder die Helligkeit der Anzeige (4) zu verändern.

6. Anzeigevorrichtung (1) nach einem oder mehreren der vorhergehenden Ansprüche, **dadurch gekennzeichnet, dass** sie mindestens eine hintere LED (13) umfasst, die mechanisch an der Stützstruktur (2) montiert und elektrisch mit dem elektronischen Steuergerät (3) verbunden ist und so konfiguriert ist, dass sie zumindest auf der Grundlage eines Fehlersignals aktiviert wird.

7. Anzeigevorrichtung (1) nach einem oder mehreren der vorhergehenden Ansprüche, **dadurch gekennzeichnet, dass** das elektronische Steuergerät (3) mindestens ein Sendemodul (14) umfasst, das elektrisch mit der Recheneinheit (6) verbunden ist und so konfiguriert ist, dass es mindestens ein Ausgangssignal (16) sendet; wobei die Vorrichtung mindestens einen Helligkeitssensor (17) umfasst, der mechanisch an der Stützstruktur (2) montiert ist, elektrisch mit dem elektronischen Steuergerät (3) verbunden ist und so konfiguriert ist, dass er einen externen Helligkeitswert der äußeren Umgebung erfasst und an die Recheneinheit (6) ein elektrisches Signal sendet, das die Messung der externen Helligkeit enthält.

8. Anzeigevorrichtung (1) nach Anspruch 7, **dadurch gekennzeichnet, dass** die Recheneinheit (6) des elektronischen Steuergeräts (3) so konfiguriert ist, dass sie das von dem Helligkeitssensor gesendete elektrische Signal empfängt und die Helligkeit der Anzeige (4) auf der Grundlage des Wertes der externen Helligkeit modifiziert.

9. Anzeigevorrichtung (1) nach Anspruch 7 oder 8, **dadurch gekennzeichnet, dass** das Sendemodul (14) so konfiguriert ist, dass es das Ausgangssignal (16), das zumindest den externen Helligkeitswert enthält, an ein externes Empfangsgerät sendet; das Empfängermodul (11) ist so konfiguriert, dass es von dem externen Gerät einen Korrekturwert empfängt, um die Helligkeit der Anzeige (4) auf der Grundlage des Korrekturwerts zu modifizieren.

10. Anzeigevorrichtung (1) nach einem oder mehreren der vorhergehenden Ansprüche, **dadurch gekennzeichnet, dass** sie mindestens einen magnetischen Sensor umfasst, der elektrisch mit der Recheneinheit (6) des elektronischen Steuergeräts (3) verbunden und so konfiguriert ist, dass er ein magnetisches Signal von außen erfasst, um der Recheneinheit (6) zu befehlen, auf die Anzeige (4) einen Einstellbildschirm der Vorrichtung zu senden.

11. Anzeigevorrichtung (1) nach einem oder mehreren der vorhergehenden Ansprüche, **dadurch gekennzeichnet, dass**:
- die Speichereinheit (9) eine Vielzahl von alphanumerischen Symbolen (27) enthält, die jeweils durch eine entsprechende Kennung identifiziert sind,
- die Recheneinheit (6) so programmiert ist, dass sie das Befehlssignal von dem Empfängermodul (11) empfängt, mindestens eines der alphanumerischen Symbole (27) auswählt, das durch die entsprechende, in dem Befehlssignal enthaltene Kennung identifiziert wird, und eine Signalanzeige auf die Anzeige (4) sendet, die mindestens ein in der Speichereinheit (9) enthaltenes alphanumerisches Symbol (27) enthält.

12. Anzeigevorrichtung (1) nach einem oder mehreren der vorhergehenden Ansprüche, **dadurch gekennzeichnet, dass** das mindestens eine alphanumerische Symbol (27) in einem dafür vorgesehenen Raum angezeigt wird, der positioniert ist:
- innerhalb des mindestens einen Bildes (26), das auf der Anzeige (4) angezeigt wird, und/oder
- außerhalb des mindestens einen Bildes (26), das auf der Anzeige (4) angezeigt wird.

13. Anzeigevorrichtung (1) nach einem oder mehreren der vorhergehenden Ansprüche, **dadurch gekennzeichnet, dass** die alphanumerischen Symbole (27) unabhängig von dem mindestens einen Bild (26), das auf der Anzeige (4) angezeigt wird, variabel sind.

14. Anzeigevorrichtung (1) nach einem oder mehreren der vorhergehenden Ansprüche, **dadurch gekennzeichnet, dass** sie so konfiguriert ist, dass sie die alphanumerischen Symbole (27) von mindestens zwei verschiedenen Farben anzeigt.

15. Anzeigevorrichtung (1) nach einem oder mehreren der vorhergehenden Ansprüche, **dadurch gekennzeichnet, dass** sie so konfiguriert ist, dass sie auf der Anzeige (4) ein Bild (26) anzeigt, das von einer Vielzahl alphanumerischer Symbole (27) begleitet wird, die die Bedeutung des Bildes (26) vervollständigen und/oder integrieren.

## Revendications

1. Dispositif d'affichage (1) pour un véhicule automobile, qui comprend :
- au moins une structure de support (2) ;
- au moins un appareil de commande électronique (3) monté mécaniquement sur ladite structure de support (2), qui comprend :
- une unité informatique (6) ;
- au moins une unité de mémoire (9) connectée électriquement à au moins ladite unité informatique (6) ;
- au moins un module récepteur (11) connecté électriquement au moins à ladite unité informatique (6) ;
- au moins un affichage (4) monté mécaniquement sur ladite structure de support (2) et connecté électriquement audit appareil de commande électronique (3) et visible de l'extérieur par un utilisateur ;
- ladite unité de mémoire (9) contient une pluralité d'images (26), à laquelle chaque image (26) est associée à au moins un identificateur ;
**caractérisé en ce que**
- ledit module récepteur (11) est configuré pour recevoir au moins un signal de commande (15) contenant au moins ledit identifiant d'au moins une desdites images (26) contenues dans ladite unité de mémoire (9) ;
- ladite unité informatique (6) est programmée pour recevoir ledit signal de commande dudit module récepteur (11), pour sélectionner ladite image (26) équipée dudit identificateur contenu dans ledit signal de commande et pour envoyer un signal d'affichage audit affichage (4) comprenant au moins ladite image (26) contenue dans ladite unité de mémoire (9).

2. Dispositif d'affichage (1) selon la revendication 1, **caractérisé en ce qu'**il comprend au moins une LED frontale (12) montée mécaniquement sur ladite structure de support (2) à côté dudit affichage (4), connectée électriquement à ladite commande électronique (3) et activée par celle-ci.

3. Dispositif d'affichage (1) selon la revendication 2, **caractérisé en ce que** ledit appareil de commande électronique (3) comprend au moins un module de commande LED (8) connecté électriquement à ladite unité informatique (6) et à ladite au moins une LED frontale (12) et configuré pour commander l'éclairage de ladite LED frontale (12).

4. Dispositif d'affichage (1) selon la revendication 3, **caractérisé en ce que** ladite unité de mémoire (9) contient une pluralité de paquets de données, chaque paquet comprenant au moins une image différente (26) et au moins une configuration d'éclairage correspondante de ladite au moins une LED avant (12).

5. Dispositif d'affichage (1) selon la revendication 4, **caractérisé en ce qu'**il comprend une pluralité desdites LED frontales (12) disposées latéralement par rapport audit affichage (4) reliées électriquement audit module de commande LED (8) ; ladite configuration d'éclairage contenue dans chacun desdits paquets de ladite unité de mémoire (9) comprenant des instructions pour éclairer avec une couleur différente et/ou pour faire clignoter ladite pluralité de LED frontales (12) et/ou pour faire varier la luminosité d'au moins une LED frontale (12) de ladite pluralité de LED frontales (12) et/ou pour faire varier la luminosité dudit affichage (4).

6. Dispositif d'affichage (1) selon une ou plusieurs des revendications précédentes, **caractérisé en ce qu'**il comprend au moins une LED arrière (13) montée mécaniquement sur ladite structure de support (2) et connectée électriquement audit appareil de commande électronique (3) et configurée pour être activée au moins à partir d'un signal d'erreur.

7. Dispositif d'affichage (1) selon une ou plusieurs des revendications précédentes, **caractérisé en ce que** ledit appareil de commande électronique (3) comprend au moins un module d'envoi (14) relié électriquement à ladite unité informatique (6) configuré pour envoyer au moins un signal de sortie (16) ; ledit dispositif comprenant au moins un capteur de luminosité (17) monté mécaniquement sur ladite structure de support (2), relié électriquement audit appareil de commande électronique (3) et configuré pour détecter une valeur de luminosité externe de l'environnement extérieur et envoyer à ladite unité informatique (6) un signal électrique contenant la mesure de ladite luminosité externe.

8. Dispositif d'affichage (1) selon la revendication 7, **caractérisé en ce que** ladite unité informatique (6) dudit appareil de commande électronique (3) est configurée pour recevoir ledit signal électrique envoyé par ledit capteur de luminosité et pour modifier la luminosité dudit affichage (4) à partir de la valeur de ladite luminosité externe.

9. Dispositif d'affichage (1) selon la revendication 7 ou 8, **caractérisé en ce que** ledit module d'envoi (14) est configuré pour envoyer ledit signal de sortie (16) contenant au moins ladite valeur de luminosité externe à un appareil de réception externe ; ledit module de réception (11) est configuré pour recevoir dudit appareil externe une valeur de correction pour modifier la luminosité dudit affichage (4) à partir de ladite valeur de correction.

10. Dispositif d'affichage (1) selon une ou plusieurs revendications précédentes, **caractérisé en ce qu'**il comprend au moins un capteur magnétique relié électriquement à ladite unité informatique (6) dudit appareil de commande électronique (3) et configuré pour détecter un signal magnétique provenant de l'extérieur afin de commander à ladite unité informatique (6) d'envoyer sur ledit affichage (4) un écran de réglage dudit dispositif.

11. Dispositif d'affichage (1) selon une ou plusieurs des revendications précédentes, **caractérisé en ce que** :
- ladite unité de mémoire (9) contient une pluralité de symboles alphanumériques (27), chacun identifié par un identifiant correspondant,
- ladite unité informatique (6) est programmée pour recevoir ledit signal de commande dudit module récepteur (11), pour sélectionner au moins l'un desdits symboles alphanumériques (27) identifiés par ledit identificateur correspondant contenu dans ledit signal de commande et pour envoyer un signal d'affichage sur ledit affichage (4) comprenant au moins un symbole alphanumérique (27) contenu dans ladite unité de mémoire (9).

12. Dispositif d'affichage (1) selon une ou plusieurs revendications précédentes, **caractérisé en ce que** ledit au moins un symbole alphanumérique (27) est affiché dans un espace dédié qui est positionné :
- dans ladite au moins une image (26) qui est affichée sur l'affichage (4) et/ou
- à l'extérieur de ladite au moins une image (26) qui est affichée sur l'affichage (4).

13. Dispositif d'affichage (1) selon une ou plusieurs revendications précédentes, **caractérisé en ce que** lesdits symboles alphanumériques (27) sont variables indépendamment par rapport à ladite au moins une image (26) qui est affichée sur l'affichage (4).

14. Dispositif d'affichage (1) selon une ou plusieurs revendications précédentes, **caractérisé en ce qu'**il est configuré pour afficher lesdits symboles alphanumériques (27) d'au moins deux couleurs différentes.

15. Dispositif d'affichage (1) selon une ou plusieurs revendications précédentes, **caractérisé en ce qu'**il est configuré pour afficher sur l'affichage (4) une image (26) accompagnée d'une pluralité de symboles alphanumériques (27) qui complètent et/ou intègrent le sens de ladite image (26).
